Europäisches Patentamt

European Patent Office

Office européen des brevets

(19)

(11) Publication number: **0 062 390**
**B1**

(12) **EUROPEAN PATENT SPECIFICATION**

(45) Date of publication of patent specification: **19.02.86**

(21) Application number: **82200433.9**

(22) Date of filing: **07.04.82**

(51) Int. Cl.⁴: **G 10 K 11/26,** G 10 K 11/20, G 01 N 29/00 ˙

(54) **Scanner for scanning an object by means of ultrasonic radiation.**

(30) Priority: **08.04.81 NL 8101744**

(43) Date of publication of application:
**13.10.82 Bulletin 82/41**

(45) Publication of the grant of the patent:
**19.02.86 Bulletin 86/08**

(84) Designated Contracting States:
**AT BE CH DE FR GB IT LI SE**

(56) References cited:
**DE-B-1 118 396**
**GB-A-2 014 312**
**GB-A-2 017 302**

(73) Proprietor: **N.V. Optische Industrie "De Oude Delft"**
**Van Miereveltlaan 9**
**NL-2612 XE Delft (NL)**

(72) Inventor: **Berbeé, Hubertus Jozef**
**de Wijngaard 15**
**NL-3181 PJ Rozenburg (NL)**
Inventor: **Vou7te, Hendrik Jan**
**Sytwinde 108**
**NL-2631 GW Nootdorp (NL)**
Inventor: **Thijssen, Johannes Maria**
**Pauluslaan 3**
**Nijmegen (NL)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

Courier Press, Leamington Spa, England.

EP 0 062 390 B1

# Description

The invention relates to a scanner for scanning an object by means of ultrasonic radiation. Such a scanner is commonly used for producing by means of pulse-echo techniques a two-dimensional image of a cross-sectional plane of an object to be examined.

To this end, successive ultrasonic pulses are transmitted in the form of relatively narrow beams to the object under examination in accordance with such a pattern that a sufficiently detailed image of the relevant cross-section of the object can be formed from the different echo signals which are received. Techniques known per se can be used for recording, processing and/or reproducing the reflected and received echo signals.

A scanner for scanning an object by means of ultrasonic waves, comprises a housing defining a space containing a transmission medium for ultrasonic waves, in which housing are disposed: transducer means for transmitting and receiving ultrasonic waves; a plurality of reflectors including one or more movable reflectors mounted for movement relative to the housing and functioning as a scanning reflector, and an object reflector positioned to receive outgoing ultrasonic waves from said scanning reflector; and focussing means for focussing said ultrasonic waves, so arranged that a beam of ultrasonic waves focussed by said focussing means and reflected by said object reflector to the object performs a scanning motion in response to movement of said scanning reflector.

A scanner of this type is known from US—A—4,185,501. This patent discloses a scanner of the sector scan type. In this prior device, a disc rotatable about a shaft and having a plurality of lens/reflector combinations peripherally mounted thereon is rotated about this shaft so that these combinations move past a fixedly mounted transducer. Ultrasonic radiation emitted from this transducer can be bundled by such a lens/reflector combination when the latter is adjacent the transducer -and reflected to an object reflector fixedly mounted in the housing, which object reflector is a flat surface.

In fact, a succession of mutually parallel beams of ultrasonic radiation is formed by the lens of a respective lens/reflector combination during the latter's movement past the transducer, each of such beams being directed by the reflector of the respective lens/reflector combination from a point on this reflector as determined by the instantaneous angular position of the disc to the fixedly mounted object reflector.

The resultant arrangement is relatively large and heavy. As a result of, inter alia, the contour of the device as dictated by the use of the rotary disc, this device permits only limited tilting movement relative to the object to be examined. Moreover, a rotation of the device relative to the object will produce a gyroscopic effect additionally impeding the handling thereof. Furthermore, provision needs to be made to absorb ultrasonic energy, which implies that multiple and interfering echo images may be expected. Finally, the prior art arrangement cannot be simply modified so that a linear scan instead of a sector scan is achieved.

A scanner of the above type, except for the afore-said focussing means, is known from DE—U—1,860,245, which discloses a scanner of the type described above. In this prior art device, the ultrasonic beam originating from fixedly mounted transducer means is so moved via a reflector, which reflector is mounted at an angle relative to the focal line of a fixed parabolically curved, cylindrical object reflector and is adapted to rotate about this focal line, that a so-called linear scan is produced.

A drawback of this prior art device is that the ultrasonic beam reflected by the object will be incident on at least one point of the object reflector at an approximately right angle. As a result, special steps will have to be taken in order to prevent parasitic, non-geometric reflections.

A scanner in which an effort is made to reduce such reflection is disclosed in NL—A—80,00299, corresponding to US—A—4,208,602. This reference discloses a device in which the beam movement required for scanning the object is achieved by using a swivelling reflector, whereby a sector shaped scan is produced. The occurrence of parasitic, non-geometric reflections in this device is prevented by a specific choice of the material and structure of the scanning reflector.

When performing examinations of rapidly varying objects, the then-required rapid swivelling of the scanning reflector may cause troublesome vibrations degrading the quality of the image. This drawback is all the more serious on account of the requirement that, to achieve adequate sensitivity, the surface area of the scanning reflector has to be large in order to reflect substantially all of the ultrasonic energy which has been transmitted.

In addition to the afore-said drawbacks, the scanners described above have the drawback that, in general, it is relatively difficult to alter the device so as to optimally conform to special requirements set by a user. Special reference is made in this respect to the optimum choice of the ultrasonic frequency band of the transducer means used and the manner of scanning. This is of particular importance for specialist applications, when only a small series of each version will be manufactured.

It is a general object of the present invention to overcome the afore-said drawbacks inherent in the prior art scanners. More in particular, it is an object of the invention to provide a scanner whose performance is improved in that

a) the image formed of the desired object area is of an outstanding quality, while being void of interferences caused for example by parasitic, non-geometric reflections, and

b) the losses occurring when the ultrasonic beams are propagating through the scanner structure are minimized.

A scanner according to the invention is characterized in that said focussing means include first focussing means adapted to form a first focus located in the vicinity of said scanning reflector and within the space defined by said housing, and second focussing means adapted to project said first focus into the object; and the sine of the angle at which said ultrasonic waves impinge on the respective ones of said reflective surfaces exceeds the ratio of the propagation velocity of the ultrasonic waves in the respective transmission medium to the propagation velocity of the transversal ultrasonic wave in the respective solid material of said reflective surfaces.

From DE—B—1,118,396 it is known per se to ultilize a first and a second focussing means in an ultrasonic testing apparatus. However, this prior art fails to disclose any suggestion for using a movable reflector means in combination with stationary reflector means for causing ultrasonic waves diverging from a first focal point to scan across a stationary reflector, whereby such ultrasonic waves are reflected to convert to a second focal point which scan through an object under examination. This prior art merely suggests to move the apparatus as an entity relative an object to be examined, and fails to provide a solution for the problems underlying the subject invention.

It is a further object of the invention to provide a scanner whereby the focal area of the ultrasonic beam within the object can be shifted, either in a static manner or in a dynamic manner, by simple means.

A scanner for achieving the above object is, according to an embodiment of the invention, further characterized in that said first focussing means are adjustable so that the location of said first focus can be shifted along the main axis of the transmission path between said transducer means and said object reflector.

With the above preferred embodiment, a small displacement of the first focus relative to the object reflector results in a relatively large displacement of the area of "optimum depth of field".

Due to the fact that with a scanner according to the invention a first focus is formed, it is possible to keep the dimensions of the scanning reflector small, since this scanning reflector is positioned in the vicinity of this first focus. This feature leads to a major advantage over prior art scanners in which such a first focus is not formed.

It is a further object of the invention to provide a scanner offering the possibility to scan a relevant object area in an optimally favourable manner. More in particular it is desired to have a scanner which by its design allows a user to readily select the shape of the scanning area through the object, so that depending on the relevant circumstances a sector-shaped, a trapezoidal or a rectangular pattern is achieved. To this end an embodiment of a scanner is characterized thereby that said object reflector can be detachably mounted in the housing.

In order to improve the focussing action a further embodiment of a scanner of the subject invention is characterized thereby that said object reflector is so formed that the ultrasonic beam reflected thereby is focussed in two mutually perpendicular planes.

Because the object reflector can be detachably mounted in the housing an object reflector having the desired characteristics can be readily mounted in the scanner structure. Moreover the position of the object reflector, in particular the focal line thereof, relative to the rotatably mounted scanning reflector, can be optimally adjusted. The scanner can thus be made to operate in accordance with one of the selected scanning modes.

For obtaining a very small-sized and easy-to-handle device a preferred embodiment of a scanner according to the invention is further characterized in that said scanning reflector is a body defining a plurality of reflector surfaces, the area of each of said reflector surfaces being small in comparison with the area of the active surface of the transducer means and the absolute aperture of each of said reflector surfaces being reduced relative to the absolute aperture of the transducer means in accordance with a ratio determined by the location of the first focus.

For further decreasing the propagation losses an embodiment of a scanner of the subject invention is characterized in that a cavity for guiding the ultrasonic beam is formed in the housing, which cavity is shaped to at least partly follow the outline of the beam in its longitudinal direction.

For further decreasing image degradation, due to vibrations generated by the scanner itself, a preferred embodiment therof is characterized thereby that the reflective surfaces of said scanning reflector are substantially parallel to the direction at which ultrasonic waves are propagated towards or from said transducing means.

In general it is an advantage of a scanner of the subject invention that it is possible to achieve a relatively high image rate of, for example, approximately 50 images per second.

The invention will be described in greater detail hereinafter with reference to the accompanying drawings, in which:

Fig. 1, combining a partly cross-sectional view with an interior view, shows an embodiment of a scanner according to the invention; and

Fig. 2 shows a cross-sectional view taken along line II—II in Fig. 1.

Self-evidently, the invention is not limited to the embodiment shown in the drawings. The drawings show a frame FM, to which frame all of the other components are attached either directly or indirectly. This frame is enclosed by a housing adapted to contain a transmission medium for ultrasonic vibrations, which housing includes a rear section AG and a front section VG. If desired, the front section may be sealed in liquid-tight fashion by means of a window VR that is transparent to ultrasonic waves.

An acoustic channel AK is provided in the frame, which channel functions as a transmission path for the ultrasonic waves. This channel has its one end terminated by a transceiver unit ZO for transmitting and receiving ultrasonic waves, which transceiver unit can be simply replaced by a similar unit having a different rate of vibration. The acoustic channel has its other end in open communication with the chamber VL defined by the front section VG. Chamber VL houses a rotatable scanning reflector TR having a plurality of mutually identical reflector surfaces and a stationary object OR detachably secured to the frame. The latter arrangement permits the object reflector to be simply replaced by one having different characteristics.

In the embodiment shown, the transceiver unit is a cylindrically body comprising a cylindrical transducer and a focussing lens FL disposed against the head face thereof, by means of which lens ultrasonic waves produced by the transceiver unit are united into a conical beam that is focussed to an intermediate or first focus TF. Seen in the direction away from the transceiver unit, the shape of the portion of the acoustic channel AK between the focussing lens FL and a stationary reflector RF is adapted to the shape of the beam. The location of the first focus while remaining in the vicinity of the scanning relfector TR can be optionally varied. For example, either by a selected setting of the focussing lens FL or by a dynamic adjustment of this lens, the location of this first focus can be varied either statically or dynamically. In principle, it is possible also to focus the beam so that the first focus is located in the part of the transmission path between the scanning reflector TR and the object reflector OR.

In the embodiment described the composite scanning reflector TR comprises four identical, rectangular, flat surfaces mounted normal to one another and spaced identical distances from the axis of rotation.

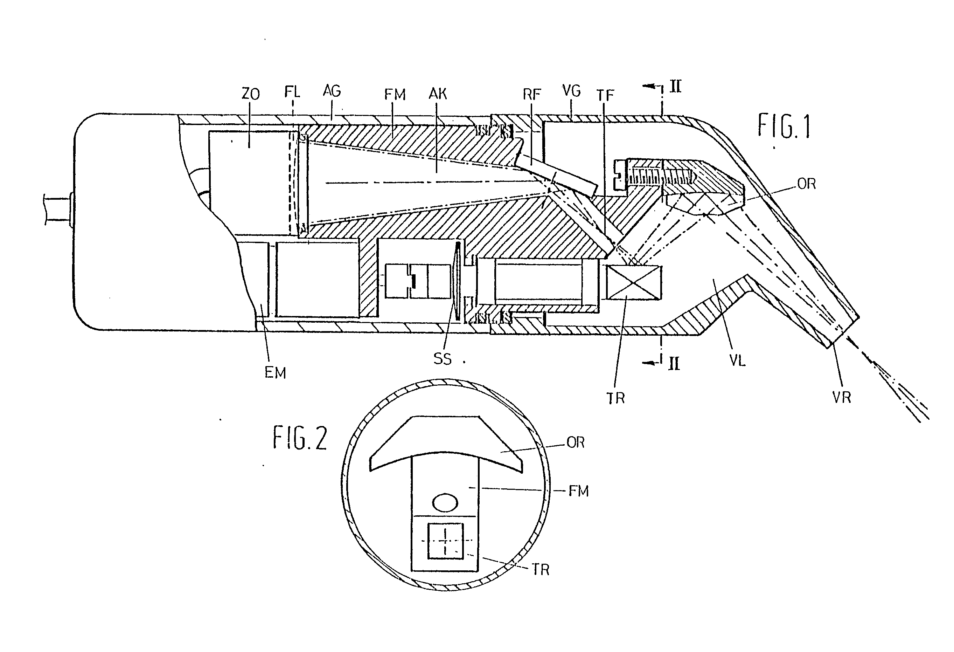

Within the scope of the present invention, other constructions of the scanning reflector are possible. By the choice of the curvature of the reflective surface of the object reflector OR in planes normal to the plane of the drawing of Fig. 1 and by the positioning of the scanning reflector relative to this object reflector (see also Fig. 2), it can be accomplished that a beam received by the object reflector from the scanning reflector during the rotation of the latter relative to the former is reflected so that a sequence of mutually parallel beams is transmitted towards the window VR. The device is thus operative as a linear scanner. If desired, by altering the relative disposition of the object reflector and the scanning reflector, as well as the construction of the object reflector and/or the scanning reflector, the scanner can be adapted for operation as, for example, a sector scanner or a scanner scanning in accordance with a trapezoidal pattern.

The curvature of the object reflector in the plane of the drawing of Fig. 2 further results in a focussing of a divergent beam received from the scanning reflector. In order to achieve a similar focussing in a plane normal to plane of the drawing, the object reflector is also curved in planes normal to the plane of the drawing of Fig. 1.

The scanning reflector TR which is bearing mounted in liquid-tight fashion, can be rotated through a coupling, a transmission mechanism and an electric motor EM. A synchronizing disc SS is mounted on the shaft for providing signals to be used for speed control and synchronization purposes.

The acoustic channel AK and the chamber VL are filled with a liquid capable of transmitting ultrasonic energy, for example water.

In accordance with an essential feature of the invention, the geometry of the transmission path for ultrasonic waves between the transceiver unit ZO and the exit of the chamber VL is such that ultrasonic vibrations propagating in the liquid can strike a portion of the boundary of this transmission path only at such an angle that total reflection occurs at the respective junction of liquid and transmission path boundary. Such total reflection will occur if the sine of the angle at which the ultrasonic vibrations propagating in the liquid strike the respective portion of the transmission path boundary is greater than the ratio of the propagation velocity of ultrasonic vibrations in the liquid and the velocity at which the transversal ultrasonic waves propagate in the solid material of this portion of the transmission path boundary.

As all of the reflectors present in the transmission path are positioned to satisfy the aforesaid condition, no reflection losses occur in a scanner according to the invention, while the resultant image is free from false reflections from these reflectors.

By means of a configuration of the type shown in Fig. 1 it is possible to achieve a relatively large area of optimum depth of field in the object area. If desired, this area of optimum depth of field may be shifted in the axial direction of the beam by varying the adjustment of the focussing lens FL and/or the position of the transceiver unit ZO.

**Claims**

1. A scanner for scanning an object by means of ultrasonic waves, comprising a housing defining a space containing a transmission medium for ultrasonic waves, in which housing are disposed: transducer means for transmitting and receiving ultrasonic waves; a plurality of reflectors including one or more movable reflectors mounted for movement relative to the housing and functioning as a scanning reflector, and an object reflector positioned to receive outgoing ultrasonic waves from said scanning reflector; and focussing means for focussing said ultrasonic waves, so arranged that a beam of ultrasonic waves focussed by said focussing means and reflected by said object reflector to the object performs a scanning motion in response to movement of said scanning reflector, characterized in that said focussing means include first focussing means adapted to form a first focus located in the vicinity of said scanning reflector and within the space defined by said housing, and second focussing means adapted to project said first focus into the object; and the sine of the angle at which said ultrasonic waves impinge on the respective ones of said reflective surfaces exceeds the ratio of the propagation velocity of the ultrasonic waves in the respective transmission medium to the propagation velocity of the transversal ultrasonic wave in the respective solid material of said reflective surfaces.

2. A scanner according to claim 1, characterized in that said first focussing means are adjustable so that the location of said first focus can be shifted along the main axis of the transmission path between said transducer means and said object reflector.

3. A scanner according to claim 1 or 2, characterized in that said object reflector is so formed that the ultrasonic beam reflected thereby is focussed in two mutually perpendicular planes.

4. A scanner according to any one of preceding claims 1—3, characterized in that said object reflector is detachably mounted in the housing.

5. A scanner according to any one of preceding claims 1—4, characterized in that said first focussing means form a structural unit with said transducer means, which unit is detachably mounted in the housing.

6. A scanner according to any one of preceding claims 1—5, characterized in that said scanning reflector is a body defining a plurality of reflector surfaces, the area of each of said reflector surfaces being small in comparison with the area of the active surface of the transducer means and the absolute aperture of each of said reflector surfaces being reduced relative to the absolute aperture of the transducer means in accordance with a ratio determined by the location of the first focus.

7. A scanner according to any one of preceding claims 1—6, characterized in that a cavity for guiding the ultrasonic beam is formed in the housing, which cavity is shaped to at least partly follow the outline of the beam in its longitudinal direction.

8. A scanner according to any one of the preceding claims, characterized in that the reflective surfaces of said scanning reflector are substantially parallel to the direction at which ultrasonic waves are propagated towards or from said transducing means.

## Revendications

1. Scanner destiné à explorer un objet au moyen d'ondes ultrasonores, comprenant un boîtier délimitant un espace qui contient un milieu de transmission pour les ondes ultrasonores, boîtier dans lequel sont disposés: un moyen transducteur destiné à émettre et à recevoir des ondes ultrasonores; une pluralité de réflecteurs qui comprennent un ou plusieurs réflecteurs mobiles montés pour se déplacer par rapport au boîtier et qui jouent le rôle d'un réflecteur de balayage; et un réflecteur objet positionné pour recevoir les ondes ultrasonores sortantes provenant dudit réflecteur de balayage; et des moyens de focalisation destinés à focaliser lesdites ondes ultrasonores, agencés de telle manière qu'un faisceau d'ondes ultrasonores focalisé par ledit moyen de focalisation et réfléchi par ledit réflecteur objet sur l'objet effectue un mouvement de balayage en réponse au mouvement dudit réflecteur de balayage, caractérisé en ce que lesdits moyens de focalisation comprennent des premiers moyens de focalisation adaptés pour former un premier foyer situé dans le voisinage dudit réflecteur de balayage et à l'intérieur de l'espace défini par ledit boîtier, et des deuxièmes moyens de focalisation adaptés pour projeter ledit premier foyer dans l'objet; et le sinus de l'angle selon lequel lesdites ondes ultrasonores tombent sur celles desdites surfaces réfléchissantes qui leur correspondent respectivement, est supérieur au rapport de la vitesse de propagation des ondes ultrasonores dans leur milieu de transmission respectif à la vitesse de propagation de l'onde ultrasonore transversale dans la matière solide desdites surfaces réfléchissantes qui lui correspond respectivement.

2. Scanner selon la revendication 1, caractérisé en ce que lesdits premiers moyens de focalisation peuvent être réglés de telle manière que la position dudit premier foyer puisse être décalée le long de l'axe principal du trajet de transmission entre lesdits moyens transducteurs et ledit réflecteur objet.

3. Scanner selon la revendication 1 ou 2, caractérisé en ce que ledit réflecteur objet est de forme telle que le faisceau ultrasonore réfléchi par ce réflecteur soit focalisé dans deux plans perpendiculaires l'un à l'autre.

4. Scanner selon l'une quelconque des revendications précédentes 1 à 3, caractérisé en ce que ledit réflecteur objet est monté dans ledit boîtier de façon démontable.

5. Scanner selon l'une quelconque des revendications précédentes 1 à 4, caractérisé en ce que lesdits premiers moyens de focalisation forment une unité structurale avec lesdits moyens transducteurs, laquelle unité est montée dans le boîtier par une liaison démontable.

6. Scanner selon l'une quelconque des précédentes revendications 1 à 5, caractérisé en ce que ledit réflecteur de balayage est un corps définissant une pluralité de surfaces réfléchissantes, l'aire de chacune desdites surfaces réfléchissantes étant petite en comparaison de l'aire de la surface active desdits moyens transducteurs et l'ouverture absolue de chacune desdites surfaces réfléchissantes étant réduite relativement à l'ouverture absolue des moyens transducteurs, selon un rapport déterminé par la position du premier foyer.

7. Scanner selon l'une quelconque des précédentes revendications 1 à 6, caractérisé en ce qu'une cavité destinée à guider le faisceau d'ultrasons est formée dans le boîtier, laquelle cavité est conformée de manière à suivre au moins en partie le contour du faisceau dans sa direction longitudinale.

8. Scanner selon l'une des revendications précédentes, caractérisé en ce que les surfaces réfléchissantes dudit réflecteur de balayage sont sensiblement parallèles à la direction dans laquelle les ondes ultrasonores se propagent vers lesdits moyens transducteurs ou en provenance desdits moyens transducteurs.

**Patentansprüche**

1. Wandler zum Abtasten von Objekten mittels Ultraschallwellen, der ein Gehäuse umfaßt, das einen Raum zur Aufnahme eines Übertragungsmediums für Ultraschallwellen bildet, wobei in dem Gehäuse angeordnet sind: eine Wandleranordnung zum Übertragen und Empfangen von Ultraschallwellen, eine Mehrzahl von Reflektoren, die einen oder mehrere bewegliche Reflektoren einschließt, die relativ zum Gehäuse beweglich montiert sind und als Abtastreflektor funktionieren, und aus einem Objektreflektor, der zum Empfangen der vom Abtastreflektor abgehenden Ultraschallwellen positioniert ist, sowie Fokussiermittel zum Fokussieren der Ultraschallwellen, die so angeordnet ist, daß ein Ultraschallwellenstrahl, der durch die Fokussiermittel fokussiert und durch den Objektreflektor auf das Objekt reflektiert wird, eine Abtastbewegung entsprechend der Bewegung des Abtastreflektors durchführt, dadurch gekennzeichnet, daß die Fokussiermittel eine erste Fokussiereinrichtung zur Bildung eines ersten Brennpunktes, die in Nähe des Abtastreflektors und innerhalb des durch das Gehäuse gebildeten Raumes angeordnet ist, und eine zweite Fokussiereinrichtung zum Projizieren des ersten Brennpunktes auf das Objekt umfassen und daß der Sinus des Winkels, bei dem die Ultraschallwellen auf die entsprechenden Reflektionsflächen auftreffen, das Verhältnis der Ausbreitungsgeschwindigkeit der Ultraschallwellen in dem entsprechenden Übertragungsmedium zur Ausbreitungsgeschwindigkeit der Ultraschallquerwelle in dem entsprechenden festen Material der erwähnten Reflektionsflächen überschreitet.

2. Wandler nach Anspruch 1, dadurch gekennzeichnet, daß die erste Fokussiereinrichtung einstellbar ist, so daß die Lage des ersten Brennpunktes entlang der Hauptachse des Übertragungsweges zwischen der Wandlereinrichtung und dem Objektreflektor verschoben werden kann.

3. Wandler nach Anspruch 2 oder 3, dadurch gekennzeichnet, daß der Objektreflektor derart ausgebildet ist, daß der durch ihn reflektierte Ultraschallstrahl in zwei zueinander rechtwinklig stehenden Ebenen fokussiert wird.

4. Wandler nach einem der Ansprüche 1 bis 3, dadurch gekennzeichnet, daß der Objektreflektor in dem Gehäuse lösbar montiert ist.

5. Wandler nach einem der Ansprüche 1 bis 4, dadurch gekennzeichnet, daß die erste Fokussiereinrichtung mit der Wandlereinrichtung eine bauliche Einheit bildet, die lösbar in dem Gehäuse montiert ist.

6. Wandler nach einem der Ansprüche 1 bis 5, dadurch gekennzeichnet, daß der Abtastreflektor ein Körper ist, der eine Vielzahl von Reflektionsflächen aufweist, daß der Flächenbereich jeder Reflektionsfläche im Verhältnis zu dem Flächenbereich der aktiven Fläche der Wandlereinrichtung klein ist und daß die absolute Apertur jeder Reflektionsfläche relativ zu der absoluten Apertur der Wandlereinrichtung reduziert ist gemäß einem Verhältnis, das durch die Lage des ersten Brennpunktes bestimmt ist.

7. Wandler nach einem der Ansprüche 1 bis 6, dadurch gekennzeichnet, daß in dem Gehäuse ein Hohlraum zur Führung des Ultraschallstrahles ausgebildet ist, der so geformt ist, daß er wenigstens teilweise dem Umriß des Strahles in seiner Längsrichtung folgt.

8. Wandler nach einem der vorangehenden Ansprüche, dadurch gekennzeichnet, daß die Reflektionsflächen des Abtastreflektors im wesentlichen parallel zu derjenigen Richtung verlaufen, in welcher sich die Ultraschallwellen von der Wandlereinrichtung ausbreiten oder zu ihr gelangen.

FIG.1

FIG.2

0 062 390